# EUROPEAN PATENT SPECIFICATION

(11) **EP 1 080 584 B1**
(45) Date of publication and mention of the grant of the patent: **28.05.2003**
(21) Application number: 99952141.2
(22) Date of filing: 17.02.1999
(51) Int. Cl.: H04N 7/26

(54) **METHOD AND APPARATUS FOR WATERMARK DETECTION FOR SPECIFIC SCALES AND ARBITRARY SHIFTS**
VERFAHREN UND VORRICHTUNG ZUR WASSERZEICHENDETEKTION FÜR SPEZIFISCHE SKALEN UND BELIEBIGE VERSETZUNGEN
TECHNIQUE DE DETECTION DE FILIGRANE POUR DES ECHELLES SPECIFIQUES ET DES DECALAGES ARBITRAIRES ET DISPOSITIF CORRESPONDANT

(30) Priority: 20.05.1998 US 86084 P
(43) Date of publication of application: 07.03.2001
(73) Proprietor: Macrovision Corporation, Santa Clara, CA 95050 (US)
(72) Inventor: COLLIER, David, C., Gilroy, CA 95020 (US)
(74) Representative: Needle, Jacqueline
(86) International application number: US9903338
(87) International publication number: WO99060791

(56) References cited:
- EP-A- 0 902 591
- WO-A-98/06216
- BRAUDAWAY G W: "Results of attacks on a claimed robust digital image watermark" OPTICAL SECURITY AND COUNTERFEIT DETERRENCE TECHNIQUES II, SAN JOSE, CA, USA, 28-30 JAN. 1998, vol. 3314, pages 122-131, XP002107541 ISSN 0277-786X, Proceedings of the SPIE - The International Society for Optical Engineering, 1998, SPIE-Int. Soc. Opt. Eng, USA

## Description

The present invention relates to a method of detecting a watermark embedded in a video stream, and a watermark detecting device.

The synergies between recently developed data compression techniques, high capacity storage media, the internet and other high bandwidth distribution channels have rendered digital media nearly ubiquitous. In view of these developments, technologies for the control of distribution, copying and identification of authorship and/or ownership of such media are gaining importance and relevance in the marketplace. In particular, the effective enforcement of copyrights in digital media is a complex problem, primarily due to the nature of the media itself. Indeed, unless preventative measures are taken, digital data is easily and perfectly reproducible, with no loss of fidelity.

So-called "digital watermarks" have gained attention recently as one possible weapon in a content developer's arsenal to combat piracy or unauthorized distribution or reproduction of digital media, such as video. In general, watermarks are a message, symbol or any distinctive marking that is transparently added to the video signal for the purpose of identifying whether the copy is an authorized one, the author of the video content, its distributor, owner or like information. The process of adding the distinctive message, symbol or marking to the digital media is generally referred to as the embedding process. Preferably, digital watermarks are embedded in the digital media (whether audio, still pictures or video) so as to render them invisible to the intended audience (such as, for example, moviegoers) and reliably detectable by appropriate detection systems. In general, visibility and detectability are directly related to one another: the more visible a watermark is, the more reliably it will be detected. Conversely, a well-concealed watermark may be difficult to reliably detect. An acceptable compromise between visibility and detectability, therefore, must typically be reached.

Several methods have been proposed to embed a watermark in a data stream. In the case of a video stream, for example, each video frame may be divided into a lattice of blocks of a given size. Each block, therefore, consists of a matrix of picture elements (hereafter, pixels), each having a number of characteristics associated therewith, such as luminance, or chrominance. A transformation may be carried out on each block. For example, a Discrete Cosine Transform (hereafter, DCT), a Discrete Fourier Transform (hereafter, DFT) or some other transformation may be carried out on each block of each frame of the video stream. Such transformations generate information related to the spectral content of the video stream. Once this information is obtained, a watermark or a portion thereof may be embedded in one or more blocks by evaluating and selectively modifying the transformed block of pixels and then applying the inverse transform. For example, a watermark or a portion thereof may be embedded as directed perturbations of a single or a plurality of blocks. By selectively perturbing the pixels of a transformed block and thereafter applying an inverse transform, for example, a watermark may be embedded with low visibility. This is possible, because the human visual and auditory systems do not readily distinguish between small variations in spectral content, making it possible for video information of a given frequency to mask watermark data of the same or an adjacent frequency.

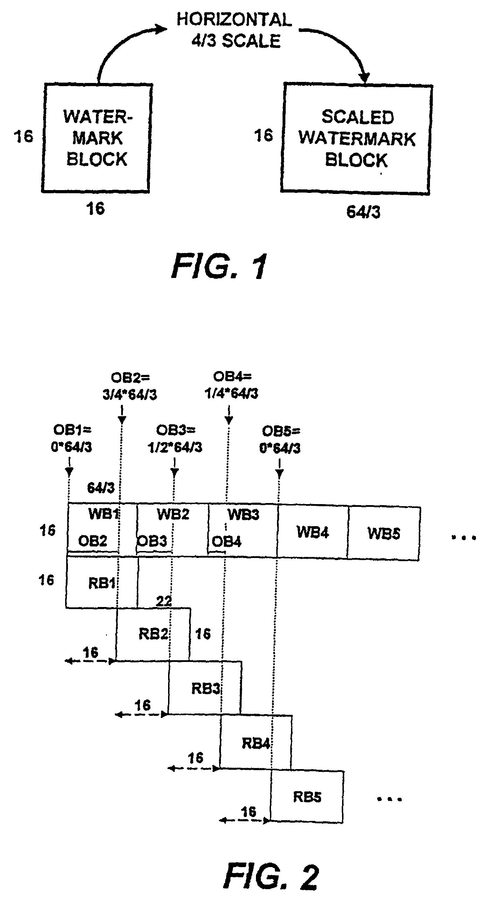

Watermarked video streams often are scaled to accommodate different formats. For example, movie theater screens generally have an approximate 16:9 aspect ratio, in that the movie theater screen is about 16 units long and 9 units wide. Television screens on the other hand have a 4:3 aspect ratio. Thus, video scaled for one format must often be scaled to another format. Video may be horizontally scaled and/or vertically scaled. Fig. 1 shows an example for the scaling of a block of watermarked video data. As shown in Fig. 1, a 16 by 16 (16 x 16) pixel watermark block of video data may, for example, in DVD applications, be horizontally scaled by a factor of, for example, 4/3, the so-called Pan and Scan scaling. The scaled watermark block then, has a vertical dimension of 16 pixels and a non-integral horizontal dimension of 16 * 4/3, or 64/3.

Video is often cropped and shifted, for the same reasons as discussed above or for altogether different reasons incident to, for example, digital compression techniques and/or unauthorized manipulations of the video stream. For example, a watermark block may not start at the origin of the first video block because of, for example, one or more missing rows or columns. Such scaling, cropping and shifting render the detection of watermarks more complex. Indeed, a given video stream may have undergone some form of scaling and shifting, but the exact scale utilized and the amount of shift of the watermark block may not be known. However, the need to reliably detect the embedded watermarks remains.

EP-A-0 902 591 describes a method for extracting a watermark from watermarked compressed data in which the watermarked data is arranged in blocks which are then spatially translated to compensate for geometric distortion.

However, the spatial translation has to be chosen to compensate for the assumed or known scale distortion.

There is therefore a need for devices and methods able to detect watermarks embedded in video streams which have undergone an unknown scaling among a predetermined and finite number of known scales.

The present invention seeks to meet this need.

According to a first aspect of the present invention there is provided a method of detecting a watermark embedded in a watermarked video stream formed of successive images, the watermarked video stream having been scaled by an unknown scale among a predetermined finite number of scales, comprising, for each of the predetermined finite number of scales, the steps of:
dividing the watermarked video stream into a plurality of equally sized scaled watermark blocks;
reading the plurality of scaled watermark blocks into a plurality of read blocks;
accumulating each of the plurality of read blocks into one of a predetermined number of read block bins, wherein the read blocks accumulated into each read block bin each have the same offset between the start of that read block and an appropriate start of the watermark blocks, whereby the strength of the watermark is reinforced whilst the video stream signal is de-emphasized;
rescaling each of the accumulated read block bins by the inverse of the respective one of the predetermined finite number of scales;
combining the rescaled accumulated read block bins into a single video accumulated block; and
evaluating a predetermined quantity within the video accumulated block to detect the watermark.

In an embodiment, the predetermined number of read block bins may be determined by each of the predetermined number of scales.

The scaled watermark blocks may be of size N * (I_{H}/J_{H}) x N * (I_{V}/J_{V}), where an original watermark has a size of N x N and where (I_{H}/J_{H}) and (I_{V}/J_{V}) are horizontal and vertical scales, respectively, and the predetermined number of read block bins may be I_{H} for each horizontal scale and Iᵥ for each vertical scale.

Preferably, the read blocks are of the same size for each of the predetermined number of scales, and are sufficiently large to accommodate an entire scaled watermark.

The evaluating step may indude the step of transforming the video accumulated block corresponding to each of the predetermined number of scales into a frequency domain. For example, the transforming step may include applying a DCT or DFT to the video accumulated block corresponding to each of the predetermined finite number of scales.

In an embodiment, the predetermined quantity to be evaluated may comprise a power of the DCT or DFT, and the evaluating step may include selecting the DCT or DFT having the greatest power, the DCT or DFT having the greatest power identifying the correct scale of the watermark among the predetermined number of scales and the correct shift of the watermark within the watermark blocks.

In a preferred embodiment, read blocks are accumulated in read block bins by cyclically distributing successive read blocks having the same offset relative to respective watermark blocks into a respective one of a predetermined number of read block bins.

The predetermined number of read block bins may be related to the scale applied to the watermark blocks. This scale may be expressed as I/J, where I and J are relatively prime and the distributing step cyclically distributes the read blocks into I respective read block bins. For each video scale of a predetermined number n of video scales of format Iₙ/Jₙ, where Iₙ and Jₙ are relatively prime, every Iₙ^{th} read block may be distributed into the same read block bin among the predetermined number of read block bins. The predetermined number of read block bins may be Iₙ.

In an embodiment, the read block bins may be memory spaces within a memory device, read blocks being accumulated into read block bins by storing and accumulating successive read blocks in the memory spaces.

The read block bins may each correspond to pixel offsets of the starts of read blocks relative to the starts of the watermark blocks within the video stream.

Preferably, the evaluating step includes the step of detecting a shift of the watermark within the watermark blocks.

The reading, accumulating, rescaling, combining and evaluating steps may be carried out for each scale within the predetermined number of scales.

Preferably, one result of the evaluating steps is selected, the selected result identifying the correct scale and shift of the watermark in the watermark blocks.

The present invention also extends to a watermark detecting device for detecting a watermark embedded in a watermarked video stream, the watermarked video stream having been scaled by an unknown scale among a predetermined finite number of scales, comprising:
means for dividing the watermarked video stream into a plurality of equally sized scaled watermark blocks;
means for reading the plurality of scaled watermark blocks into a plurality of read blocks;
means for accumulating each of the plurality of read blocks into one of a predetermined number of read block bins, wherein the read blocks accumulated into each read block bin each have the same offset between the start of that read block and an appropriate start of the watermark blocks, whereby the strength of the watermark is reinforced whilst the video stream signal is de-emphasized;
means for rescaling each of the accumulated read block bins by the inverse of the respective one of the predetermined finite number of scales;
means for combining the rescaled accumulated read block bins into a single video accumulated block; and
means for evaluating a predetermined quantity within the video accumulated block to detect the watermark.

Embodiments of the present invention will hereinafter be described, by way of example, with reference to the accompanying drawings, in which:-
Fig. 1 schematically represents the scaling of a 16 x 16 watermarked block of video pixels by a horizontal scale of 4/3, to generate a 16 x 64/3 watermarked block of video pixels.
Fig. 2 is a block diagram illustrating an embodiment of a method of the invention, using the illustrative example of a 16 x 16 watermark block scaled by a horizontal factor of 4/3.
Fig. 3 is a block diagram illustrating video accumulation according to an embodiment of the present invention, using the illustrative example of a 16 x 16 watermark block scaled by a horizontal factor of 4/3.
Fig. 4 is a block diagram illustrating the rescaling of accumulated blocks and the combining of accumulated blocks with a shift prior to detection of a watermark, using the illustrative example of a 16 x 16 watermark block scaled by a horizontal factor of 4/3.
Fig. 5 illustrates the scaling of an N x N watermarked block of video pixels by both a horizontal scale of xScale and a vertical scale of yScale, to generate a N * xScale x N * yScale watermarked block of video pixels.
Fig. 6 is a block diagram illustrating an embodiment of a method of the invention, using an illustrative example wherein an N x N watermark block is scaled by a horizontal factor of xScale.
Fig. 7 is a block diagram illustrating video accumulation using an illustrative example wherein an N x N watermark block is scaled by a horizontal factor of xScale.
Fig. 8 is a block diagram illustrating rescaling of accumulated blocks and combining of the accumulated blocks with a shift prior to detection of the watermark, using an illustrative example wherein an N x N watermark block is scaled by a horizontal factor of xScale.
Fig. 9 is a flow chart of a method of an embodiment of the invention, for three known scales.

The method described and illustrated utilizes a video accumulation procedure to allow the detection of watermarks (and subsequent deciphering of the watermark payload) in watermark-embedded video streams which have undergone an unknown scaling and/or an arbitrary pixel shift. The term watermark is used to encompass any intentionally concealed message, symbol or other artifact that conveys some information such as, for example, indicia of ownership or authorship that is designed to be substantially invisibly hidden into the data stream. To detect watermarks within a watermark-embedded video stream requires that blocks of video data be read from the stream and individually or collectively evaluated for the presence or absence of a watermark or watermarks. However, since the scale applied to the stream is unknown, the appropriate size of the read block is also unknown. An embodiment of a method of the invention solves this problem by reading and processing the video stream in blocks of sufficient size to accommodate watermark blocks scaled by the largest commonly used scales. This procedure may be carried out either serially or in parallel. After the watermarked video processing method has been carried out for a variety of different scales, the watermark, if present, will stand out strongest at the correct shift and in the correct scale, the correct scale being the scale applied to the watermark in the video stream.

An infinite number of scales are theoretically possible, and the methods described herein are capable of detecting watermarks in a video stream scaled by any scaling factor in the horizontal and/or vertical dimensions, given sufficient time and/or processing power. In practice, however, only a limited number of scales are in common use, as only a limited number of video formats are supported. In practice, therefore, the number of different scales which must be evaluated to detect watermarks embedded therein in an accurate and reliable manner is greatly reduced. It is to be understood, however, that the present invention is not limited to any particular scale dimension or to any particular number of scales currently in use.

Fig. 2, for illustrative purposes only, assumes that the original video embedded watermark has a block size of 16 x 16 pixels and that a horizontal scale of 4/3 (one of the known scales currently in use) has been applied thereto. Therefore, the original 16 x 16 watermarked blocks have undergone a horizontal scaling of 4/3, resulting in possibly overlapping but equally sized watermarked blocks, labeled as WB1-5, having 16 pixels in the vertical direction and 16 * 4/3 pixels (64/3 pixels, or about 21.3 pixels) in the horizontal dimension. Therefore, each video frame of the scaled and watermark embedded video signal is divided into a plurality of 16 x 64/3 blocks. To detect the watermarks within the scaled video stream, it is necessary to read the blocks, including WB1-5 and all subsequent blocks not shown in Fig. 2. However, it is not possible to read 21.3 pixels. Therefore, a read block size of 16 x 22 pixels is chosen, as shown in read blocks RB1, RB2, RB3, RB4 and RB5. To maintain consistency with the original 16 x 16 watermark size, the 16x22 read blocks RB1 through RB5 (and all subsequent read blocks not shown in Fig 2) start every 16 pixels. Hence, the read blocks RB1 through RB5 (and all subsequent read blocks not shown in Fig. 2) overlap one another. The overlapping read blocks RB1 through RB5 are shown on different lines only for clarity.

As shown in Fig. 2, the beginning of the first read block RB1 is aligned with the beginning of the first scaled watermark block WB1 and its offset OB1 relative to WB1 is zero, by inspection. The beginning of the second read block RB2 starts 16 pixels from the beginning of WB1 and is, therefore, offset relative to WB1 by a non-zero relative offset OB2. The relative offsets OB1, OB2, ... ... OBn, are the fractional remainders of dividing (n * 16) by 64/3, where n = 0, 1, 2, 3... and where 64/3 is the horizontal dimension of the scaled watermark blocks WB1, WB2, WB3... Stated differently, the relative horizontal offsets OB1, OB2, ...OBn (the offsets of the start of the read blocks relative to the start of the watermark blocks), are derived by evaluating the expression (K * N) / (N * I/J) = K / (I/J), where N = 16 in this example only, where K is cyclically equal to (0, 1, 2, ... I-1) and where "*" denotes the multiplication operation.

Thus, in the case of a 4/3 scale, as shown in Fig. 2, the relative offset OB1 is zero because the fractional remainder of dividing 0 * 16 by 16 * 4/3 is zero. The same result is obtained by evaluating the fractional remainder of the expression K / (I/J) for K = 0 and I/J = 4/3. The relative offset OB2 is equal to the factional remainder of dividing 1 * 16 by (16*4/3) or 3/4. Thus, read block RB2 begins 16 pixels from RB1 and is offset relative to the beginning of WB1 by 3/4 of the horizontal dimension of the scaled watermark block WB1. Likewise, the relative offset OB3 is equal to the fractional remainder of dividing 2 * 16 by (16 * 4/3 or 1/2. The same result is obtained by evaluating the fractional remainder of the expression K / (I/J) where K = 2 and (I/J) = 4/3. Thus, RB3 begins 16 pixels from RB2 and is offset relative to the beginning of WB2 by 1/2 of the horizontal dimension of the scaled watermark block WB2. Similarly, the relative offset OB4 is equal to the fractional remainder of dividing 3 * 16 by (16* 4/3) or 1/4. Thus, RB4 begins 16 pixels from RB3 and is offset relative to the beginning of WB3 by 1/4 of the horizontal dimension of the scaled watermark block WB3. The same result is obtained by evaluating the fractional remainder of the expression K / (I/J) where K = 3 and (I/J) = 4/3.

The offsets from the scaled watermark blocks, and consequently the fraction of the horizontal dimension of the scaled watermark block that these offsets represent then repeat in cyclical fashion, as follows. As is offset of the first read block RB1, the relative offset OB5 is once again zero, as the fractional remainder of dividing 0 * 16 by (16 * 4/3) is zero. Thus, RB5 begins 16 pixels from RB4 and is aligned with the beginning of WB4. Similarly, the relative offset OB6 (not shown) can be shown to be equal to 3/4, the relative offset OB7 (not shown) can be shown to be equal to 1/2, the relative offset OB8 (not shown) can be shown to be equal to 1/4, and the relative offset OB9 (not shown) can be shown to be aligned, once again with the next watermark block, WB9 (not shown). The relative offsets OB6, RB7, RB8 and OB9 represent fractions of 3/4, 1/2, 1/4 and 0 of the horizontal dimension of the scaled watermark block, respectively. Thus, it can be seen that RB1, RB5, RB9, RB13, and every subsequent fourth read block will have an offset of zero. Similarly, it can be seen that RB2, RB6, RB10 and every subsequent fourth read block will have a 3/4 offset, relative to the horizontal length of the watermark block, as shown in Fig. 2. Likewise, RB3, RB7, RB11 and every fourth subsequent read block will have a 1/2 offset, whereas RB4, RB8, RB12 and every fourth subsequent read block will have a 1/4 offset, relative to the horizontal length of the scaled watermark blocks.

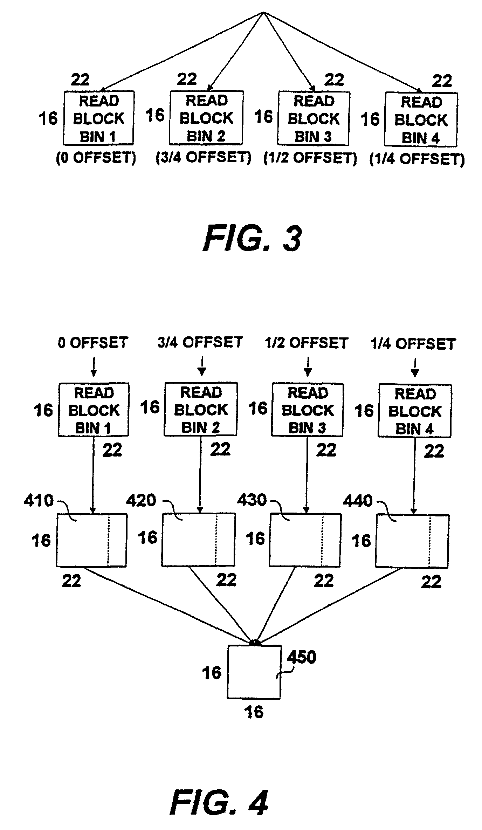

Accordingly, the read blocks RB1, RB2, RB3 ... of Fig. 2 may be classified according to a limited number of relative offset magnitudes OB1, OB2, OB3 ... In the case of a horizontal scale of 4/3, only four different fractional remainders exist, corresponding to fractions of the horizontal length of the watermark blocks of 0, 3/4, 1/2 and 1/4, respectively. Thus, the read blocks RB1, RB2, RB3 ... may be organized into four offset-consistent 16 x 22 read block bins, or memory spaces, each bin corresponding to one of the possible offsets, as shown in Fig. 3. Each video frame is traversed, read block by read block, each read block being added to the preceding block having the same offset in a specific read block bin corresponding to the appropriate offset. This video accumulation into specific bins corresponding to computed offsets is unaffected by any initial shift between the watermark and the first read block.

According to the example shown in Fig. 3, read blocks having an offset of zero may be accumulated in read bin 1, read blocks having an offset of 3/4 relative to the horizontal dimension of the scaled watermark block may be accumulated in read bin 2, read blocks having an offset of 1/2 relative to the horizontal dimension of the scaled watermark block may be accumulated in read bin 3 and read blocks having an offset of 1/4 relative to the horizontal dimension of the scaled watermark block may be accumulated in read bin 4. Each read bin accumulates blocks having a consistent offset. Thus, the fractional remainder operation may be used to accumulate read blocks having like offsets. In the case of a 4/3 scale, as shown in Fig. 2, the read blocks are cyclically distributed into 4 separate bins.

Each bin may correspond to a predetermined memory space of a computing device and the values corresponding to one or more selected characteristics of the pixels may be stored within the predetermined memory spaces. For example, the luminance values of the pixels of the read blocks may be chosen as the selected characteristic for accumulation in the read block bins. During the accumulation (i.e. adding) procedure, a selected pixel characteristic or characteristics of corresponding pixels of each accumulated block within each bin are added to one another. As the video signal is generally a relatively uncorrelated signal as compared to the watermark signal, the strength of the watermark will be reinforced as the read blocks accumulate, whereas the video signal itself will tend toward a mean gray level.

A filtering criteria may also be imposed at this stage of processing, to allow for selective block processing. Such selective block processing would allow the accumulation of only those read blocks having passed a given criterion. According to one such selective block processing method, the criterion utilized to detect the watermark matches the criterion employed to determine in which blocks to embed the watermark, during the watermark embedding process. Such a selective block processing method allows the visibility of the watermark to be advantageously reduced without affecting the apparent strength of the watermark signal during detection thereof.

When a sufficiently large number of read blocks have been accumulated in each of the read block bins, the accumulated read blocks may be rescaled, adjusted for differential offset, combined into a single block and the scale and shift of the watermark detected. Subsequently, the structure of the detected watermark may be evaluated to e.g., decipher the hidden message thereof. As shown in Fig. 4, the read blocks are now organized into four read block bins, each bin receiving and accumulating read blocks having the same offset. Each of the read blocks bins 1 through 4 are now rescaled by 3/4 (the inverse of the original 4/3 scale), to create rescaled 16 x 16 pixel read blocks 410, 420, 430 and 440. Each of the 16 x 16 pixel rescaled read blocks 410, 420, 430 and 440 are then combined through shifting into a single rescaled 16 x 16 video accumulated block 450. Indeed, the selected characteristic or characteristics of corresponding pixels of each of the rescaled read blocks 410, 420, 430 and 440 are added together to form a single rescaled 16 x 16 video accumulated block 450.

The above-described procedure is preferably carried out in parallel for each scale under consideration. The described methods allow for the detection of watermarks in video streams having been scaled by an unknown scale factor. What is generally known, however, is which scales are in common use for video. Those scales that are in common use constitute a finite universe of known scales. It is, therefore, not unduly burdensome to test the video stream against each of these commonly used scales in the manner described above. Testing the video streams against each of the commonly used scales will produce a single rescaled video accumulated block for each of the scales under consideration. A detection algorithm may then be run on each of the rescaled video accumulated blocks, such as the rescaled 16x16 video accumulated block 450 of Fig. 4.

An exemplary detection algorithm may transform each of the video accumulated blocks from the spatial to the frequency domain to detect the watermark and ascertain the scale and shift applied to the watermark blocks. For example, two dimensional (2-D) DCTs may be computed for each of the rescaled 16 x 16 accumulated blocks 450. In this case, 256 (16 * 16) DCTs must be carried out for each 16 x 16 accumulated block 450, one for each possible offset of the watermark within the block 450. Indeed, due to possible loss of rows and/or columns due to cropping, compression algorithms and/or other digital manipulation, the watermark block may not begin at the origin of the video accumulated block 450, but may be shifted therein by an unknown number of pixels. For that reason, it is necessary to compute 256 DCTs on each of the 16 x 16 matrices of the blocks 450, starting each of the 256 DCTs at a different origin pixel within each of the video accumulated blocks 450. In this manner, if three scales are under consideration, three different 16 x 16 accumulated video blocks 450 will be obtained. For each of these video accumulated blocks 450, 256 DCTs must be carried out, for a total of 768 DCTs. Assuming that the same number of read blocks is accumulated in each of the read block bins for each scale under consideration, then the watermark will most likely manifest itself strongest in that rescaled video accumulated block 450 having the greatest DCT power. The DCT among the 768 such DCTs having the greatest power, therefore, will simultaneously indicate which scale was used and the shift of the watermarks within the watermark blocks. Indeed, the DCT having the maximum power will be present in that video accumulated block 450 corresponding to the correct scale and that location within that block 450 corresponding to the correct shift. This is because the video signal, when considered over time and space (a sufficient number of read blocks), is a generally wide sense stationary signal. The watermark signal, on the other hand, may be an unchanging (albeit weak) signal that is concealed in the video stream. After accumulation, therefore, the watermark signal will be reinforced whereas the uncorrelated video signal will be de-emphasized, manifesting itself as a mean gray image, for example. By identifying the rescaled accumulated video block 450 having the DCT exhibiting the greatest power, therefore, the watermark and the correct scale and shift will have been detected.

The present invention is not limited to video accumulated blocks 450 having a size of 16 pixels by 16 pixels. Smaller or larger block sizes may be used, larger block sizes leading to more efficient coding, but increasing the computational complexity of the transform.

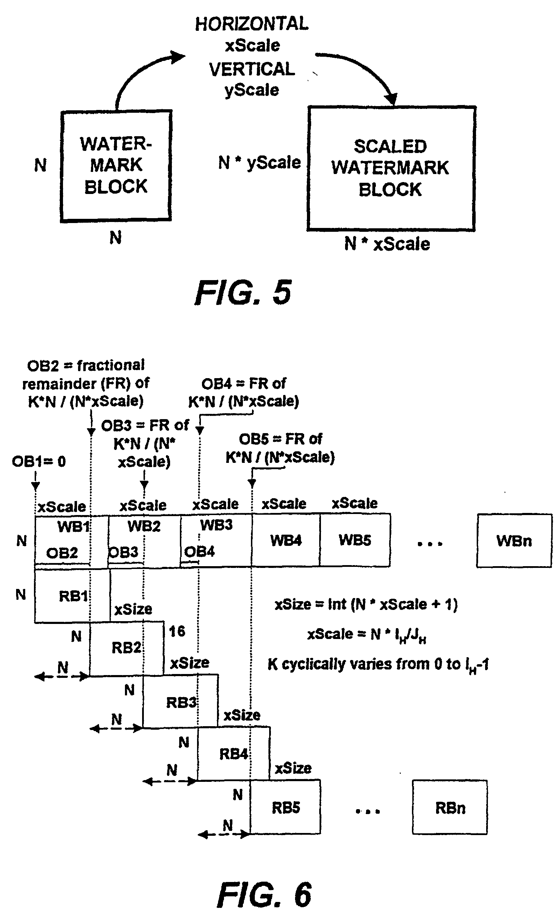

The disclosure above, for illustrative purposes, is drawn to the specific case of a 16 x 22 pixel read block and a watermark block having a horizontal scale of 4/3. However, the methods described may readily be generalized to watermarked blocks of any dimension, scaled to any scale and shifted within the watermark blocks by any arbitrary number of pixels. Indeed, assuming that xScale is one possible horizontal scale and that yScale is one possible vertical scale, then xScale may be represented as I_{H}/J_{H} and yScale may be represented by Iᵥ/Jᵥ, where (I_{H},J_{H})are relatively prime numbers and where (I_{V},J_{V}) are also relatively prime numbers. If the original size of the watemnark block is assumed to be N x N pixels in size, meaning a watermark block having N pixels in the horizontal direction and N pixels in the vertical direction, then the scaled watermark blocks will have dimensions of (N * xScale) x (N * yScale) as shown in Fig. 5, which expression is equivalent to (N * I_{H}/J_{H}) x (N * I_{V}/J_{V}). For simplicity, the following description will set forth the general case wherein the watermark block is scaled only in the horizontal direction. Of course, it will be understood that scaling in either or both of the horizontal and vertical directions may be applied.

To insure that the entire watermark block may be contained within the read block, the read block preferably has a size of N x int (N * xScale + 1), where "int" is the mathematical truncating integer function. Therefore, considering only horizontal scales, the read block size or quanta may be N x int ((N * I_{H}/J_{H}) + 1). The start of each successive read block is preferably incremented by N pixels relative to the start of the previous read block. The horizontal start of the reading blocks relative to the watermark blocks, however, preferably is the fractional remainder of dividing (Shift + K * N) by (N * I_{H}/J_{H}). This is equivalent to the fractional remainder of ((Shift / N) * J_{H}/I_{H} + K * J_{H}/I_{H}), where Shift denotes the beginning or origin of the watermark within a read block and where K is cyclically equal to (0, 1, 2, .... I_{H}-1). If J_{H} and I_{H} are relatively prime, then the cycle length of the remainders will be exactly I_{H}, since the fractional remainder upon division of the expression ((Shift / N) * J_{H}/I_{H}) is equal to the fractional remainder of ((Shift / N) * J_{H}/I_{H} + I_{H} * J_{H}/I_{H}), since J_{H} is an integer. Therefore, I_{H} read block bins are sufficient to accumulate the N x int (N * I_{H}/J_{H} + 1) sized read blocks so that the watermark blocks accumulated in each bin will have the same offset.

The read blocks are preferably large enough to insure that the scaled watermark is fully contained therein, for any of the scales under consideration. Smaller read blocks may also be used, although the best result (most reliable detection) will be obtained when the I_{H} read bins are sufficiently large as to accommodate an entire scaled watermark. Therefore, the maximum preferred size of the read blocks may be int (N * maxYscale + 1) x N in the case wherein only vertical scales are under consideration, N x int (N * maxXscale + 1) in the case wherein only horizontal scales are under consideration, or int (N * maxYscale + 1) x int (N * maxXscale + 1) in the case wherein both vertical and horizontal scales are under consideration, where maxXscale and maxYscale are the maximum-sized scales under consideration in the x and y directions, respectively.

As shown in Fig. 6, the video stream is divided into a plurality of n watermark blocks, labeled WB1 through WBn. The watermark blocks, in the case of a horizontal scaling, have dimensions N x N * xScale, or N x N * I_{H}/J_{H}. The read blocks RB1 through RBn have dimensions N x int (N * xScale + 1), to insure that an entire watermark block will be read, up to the maximum-sized scaled watermarks under consideration. The read blocks RB1 through RBn are offset relative to one another by N pixels and are offset relative to their corresponding watermark blocks WB1 through WBn by the fractional remainder of the division of K * N by (N xScale), where K is cyclically equal to (0, 1, 2, ... I_{H}-1). In the 4/3 horizontal case discussed relative to Fig. 2, for example, K is cyclically equal to 0, 1, 2, 3, 0, 1, 2, 3, 0 ... Thus, as shown in Fig. 6, RB1 is aligned with WB1 and the relative offset OB1 is the fractional remainder of the division of K * N by (N * xScale), where K = 0. RB2 is offset from WB1 by the fractional remainder of dividing K * N by (N * xScale), where K = 1. The starts of subsequent read blocks are offset from the starts of the watermark blocks in the same manner, until K is equal to I_{H}-1, whereupon K cycles back to 0 for the next read block.

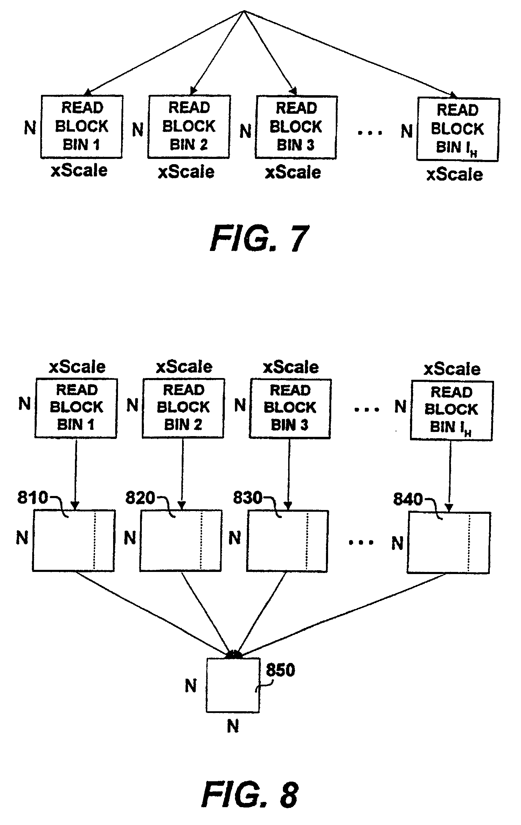

Returning now to the example wherein the scale under consideration is a horizontal scale of I_{H}/J_{H}, the read blocks may be organized, using the fractional remainder operation described above, according to their offsets relative to the watermark blocks, there being only a finite number I_{H} of such offsets. As shown in Fig 7, the read blocks, therefore, may be organized into I_{H} separate bins, each of which may be, for example, a distinct memory space of a computing device, and each corresponding to one of the I_{H} offsets of the horizontal start of the read blocks relative to the horizontal start of the watermark blocks, continuing with the current horizontal scale example. The values corresponding to one or more selected characteristics of the pixels may be stored within the I_{H} read block bins. For example, the luminance values of the pixels of the read blocks may be chosen as the selected characteristic for accumulation in the read block bins. During the accumulation (i.e., adding) procedure, a selected pixel characteristic or characteristics of corresponding pixels of each accumulated block within each of the I_{H} read block bins will be added to one another. As the video signal is generally a relatively uncorrelated signal as compared to the watermark signal, the strength of the watermark will be reinforced, whereas the video signal itself will trend towards a mean gray scale.

The number of read blocks that need to be accumulated in each of the I_{H} read block bins prior to carrying out a detection algorithm will vary according to the strength of the embedded watermark signal in the video stream. It is to be noted that the strength of the watermark may be decreased by judiciously selecting the blocks in which to embed a watermark.

As shown in Fig. 8, the read blocks are now organized into I_{H} read block bins, each receiving read blocks having the same offset. Each of the read blocks bins are then rescaled by J_{H}/I_{H} (the inverse of the original I_{H}/J_{H} scale under consideration), to create rescaled N x N pixel read blocks 810, 820, 830, ... 840. Each of the N x N pixel rescaled read blocks 810, 820, 830 ... 840 are then adjusted for offset and combined into a single rescaled N x N video accumulated block 850 using, for example, single dimensional affine transformations. Indeed, the selected characteristic or characteristics of corresponding pixels of each of the rescaled blocks 810, 820, 830 ... 840 are combined together to form a single rescaled N x N video accumulated block 850 by linear maps utilizing a resampling interpolation filter, for example.

The above-described procedure is then repeated for each scale under consideration, to yield a single N x N video accumulated block 850 for each scale under consideration. Testing the video stream against each of the commonly used scales will produce a single rescaled video accumulated block 850 for each of the scales under consideration. A detection algorithm may now be run on each of the rescaled N x N video accumulated blocks 850 of Fig. 8. For example, DCTs or DFTs may be used in the detection algorithm to detect the watermark and ascertain the scale and any shift that may have been applied to the watermark within the watermark blocks.

For example, 2-D DCTs may be computed for each of the rescaled N x N video accumulated blocks 850. In this case, N * N separate DCTs must be carried out for each N x N accumulated block 850, one DCT for each possible offset of the watermark within the video accumulated block 850. Indeed, due to possible loss of rows and/or columns caused by cropping, compression algorithms and/or other digital manipulation, the watermark block may not begin at the origin of the video accumulated block 850, but may be shifted therein by an unknown number of pixels. For that reason, where DCTs are used as a step of the detection mechanism, it is necessary to compute N * N DCTs on each of the N x N video accumulated blocks 850, starting each of the N * N DCTs at a different origin pixel within the N x N video accumulated block 850.

In this manner, if three scaled are under consideration, three different N x N accumulated video blocks 850 will be obtained. For each of these video accumulated blocks 850, N * N DCTs may be carried out, for a total of 3 * N * N DCTs. Assuming that the same number of read blocks is accumulated in each of the read block bins for each scale under consideration, then the watermark will most likely manifest itself strongest in that rescaled video accumulated block 850 having the greatest DCT power. The DCT having the greatest power, therefore, will simultaneously point to the correct scale and the correct shift of the watermark, if any, within the watermark blocks. Indeed, the DCT having the greatest power will be present in that video accumulated block 850 corresponding to the correct scale and at that location within that block corresponding to the correct shift. This is because the video signal, when considered over time and space (a sufficient number of read blocks), is generally a mean gray scale. The watermark signal, on the other hand, may be an unchanging (albeit weak) signal that is concealed in the video stream. After accumulation, therefore, the watermark signal will be reinforced, whereas the uncorrelated video signal will be de-emphasized, manifesting itself as a mean gray scale, for example. By identifying the rescaled accumulated video block 850 having the DCT exhibiting the greatest power, therefore, the watermark and the correct scale and shift will have been detected.

In some instances, there might be several rescaled accumulated video blocks 850 having DCTs exhibiting statistically significant power levels over the mean power level of the uncorrelated video signal. Those rescaled accumulated video blocks 850 most likely correspond to scales that are, for example, an integral multiple of the correct scale, the correct scale being that scale in fact applied to the original video stream. Even in such a case, however, the rescaled accumulated video block exhibiting the greatest DCT power will most likely carry the watermark, if present, and will indicate the scale of the original video stream. Moreover, the origin pixel of the DCT having the greatest power will indicate the shift imposed upon the watermark within the watermark blocks. Alternatively, if none of the scales under consideration yield a rescaled accumulated video block 850 exhibiting a watermark signal rising significantly above the mean of the video signal, no watermark may have been embedded in the video stream and/or the video stream may have been scaled using a scale that has not yet been considered.

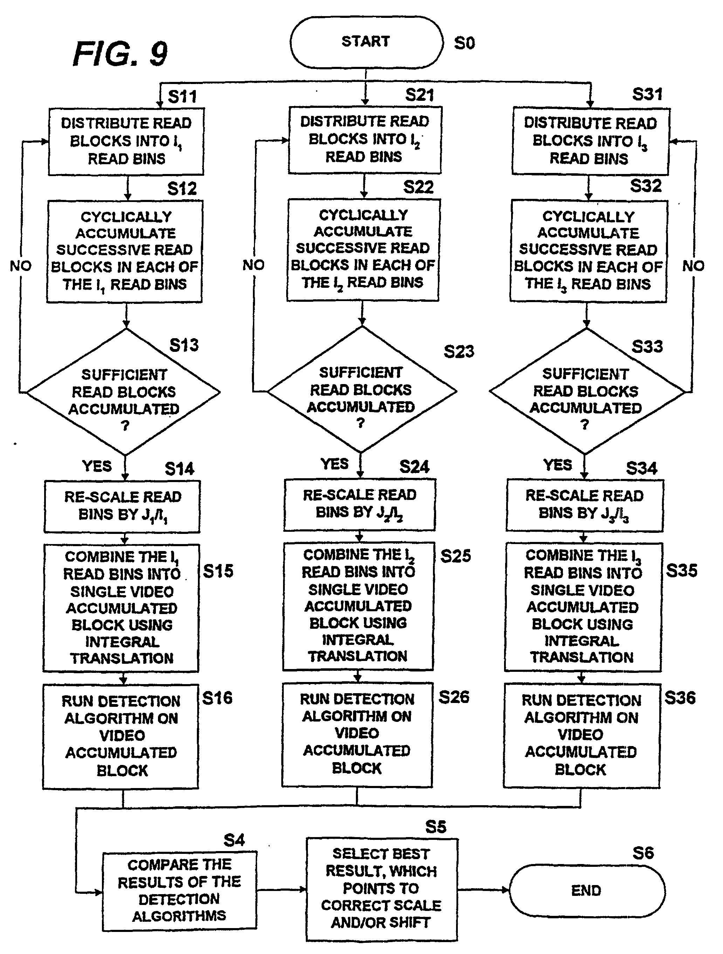

Fig. 9 shows an embodiment of the method for detecting watermarks having undergone an unknown scaling and an arbitrary shift. The method beings as step S0. Thereafter, a number of steps are carried out for each scale I/J under consideration. In the illustrative example of Fig. 9, three such scales are under consideration; namely, I₁/J₁; I₂/J₂ and I₃/J₃. The method is extendable to any number of such scales, the only limitation being the processing power and speed of the equipment carrying out the method relative to the data rate of the video stream. Preferably, the present method is carried out in real time, meaning at a rate sufficient to keep pace with the video stream.

Steps S11 through S16 are carried out for scale I₁/J₁; steps S21 through S26 are carried out for scale I₂/J₂ and steps S31 through S36 are carried out for scale I₃/J₃. In steps S11, S21 and S31, the watermark blocks are read in read blocks of equal size in the manner described above and distributed in turn into the I₁, I₂ and I₃ read bins respectively. In steps S12, S22 and S32, the watermark blocks in each of the respective read bins are accumulated as they are distributed therein. As this operation entails only additions of selected characteristic(s) of the constituent pixels of the read blocks, it is well suited to be carried out while keeping pace with the video stream. After it is determined, in steps S13, S23 and S33 that a sufficient number of read blocks have been accumulated in each of the read bins according to some predetermined criterion, steps S14, S24 and S34 are carried out, wherein rescaled read blocks, such as rescaled read blocks 810 through 840 in Fig. 8, are created by scaling the watermark blocks accumulated in the read bins by J₁/I₁; J₂/I₂ and J₃/I₃, respectively. In steps S15, S25 and S35, the rescaled read blocks are combined into a single video accumulated block such as shown at 850 in Fig. 8 using integral translation, to create one such accumulated video block for each of the three scales under consideration in the example of Fig. 9. In steps S16, S26 and S36, a detection algorithm is carried out for each of the three video accumulated blocks produced by steps S15, S25 and S35.

For example, the detection algorithm may transform the three video accumulated blocks from the spatial to the frequency domain, using, for example, a discrete Fourier or Cosine transform. In the case of DCTs, a number of transforms may be carried out, one for each pixel in the video accumulated block. For example, if the video accumulated blocks are of size N x N, a number equal to N * N of such DCTs may be carried out. In step S4, the results of the comparisons run in steps S16, S26 and S36 are compared and the best result is selected, as shown in step S5. For example, when DCTs are carried out in steps S16, S26 and S36, the powers of all (3 * N * N) 2-D DCTs are compared and that DCT having the greatest power will point to the shift, if any, of the watermark within the watermark blocks and to the scale at which the watermark was scaled within the video stream. The method ends at step S6.

While the foregoing detailed description has described preferred embodiments of the present invention, it is to be understood that the above description is illustrative only. For example, detection methods other than those specifically described may be utilized. Moreover, the read blocks may have a size that is different from that described.

## Claims

1. A method of detecting a watermark embedded in a watermarked video stream formed of successive images, the watermarked video stream having been scaled by an unknown scale among a predetermined finite number of scales, comprising, for each of the predetermined finite number of scales, the steps of:
dividing the watermarked video stream into a plurality of equally sized scaled watermark blocks;
reading the plurality of scaled watermark blocks into a plurality of read blocks;
accumulating each of the plurality of read blocks into one of a predetermined number of read block bins, wherein the read blocks accumulated into each read block bin each have the same offset between the start of that read block and an appropriate start of the watermark blocks, whereby the strength of the watermark is reinforced whilst the video stream signal is de-emphasized;
rescaling each of the accumulated read block bins by the inverse of the respective one of the predetermined finite number of scales;
combining the rescaled accumulated read block bins into a single video accumulated block; and
evaluating a predetermined quantity within the video accumulated block to detect the watermark.

2. A method as claimed in Claim 1, wherein the predetermined number of read block bins is determined by each of the respective predetermined finite number of scales.

3. A method as claimed in Claim 2, wherein the scaled watermark blocks are of size N* (I_{H}/J_{H}) x N* (I_{V}/J_{V}), where an original watermark has a size of N x N and where (I_{H}/J_{H}) and (I_{V}/J_{V}) are horizontal and vertical scales, respectively, and wherein the predetermined number of read block bins is I_{H} for each horizontal scale and I_{V} for each vertical scale.

4. A method as claimed in any preceding claim, wherein the read blocks are of the same size for each of the predetermined number of scales, and are sufficiently large to accommodate an entire scaled watermark.

5. A method as claimed in any preceding claim, wherein the evaluating step includes the step of transforming the video accumulated block corresponding to each of the predetermined finite number of scales into a frequency domain.

6. A method as claimed in Claim 5, wherein the transforming step includes applying a DCT or DFT to the video accumulated block corresponding to each of the predetermined finite number of scales.

7. A method as claimed in Claim 6, wherein the predetermined quantity to be evaluated comprises a power of the DCT or DFT, and wherein the evaluating step includes selecting the DCT or DFT having the greatest power, the DCT or DFT having the greatest power identifying the correct scale of the watermark among the predetermined number of scales and the correct shift of the watermark within the watermark blocks.

8. A method as claimed in any preceding claim, wherein read blocks are accumulated in read block bins by cyclically distributing successive read blocks having the same offset relative to respective watermark blocks into a respective read block bin of a predetermined number of read block bins.

9. A method as claimed in Claim 8, wherein the predetermined number of read block bins is related to the scale applied to the watermark blocks.

10. A method as claimed in Claim 9, wherein the scale applied to the watermark blocks is I/J where I and J are relatively prime and wherein the distributing step cyclically distributes the read blocks into respective I read block bins.

11. A method as claimed in Claim 10, wherein, for each video scale of a predetermined number n of video scales of format Iₙ/Jₙ, where Iₙ and Jₙ are relatively prime, every Iₙ^{th} read block is distributed into the same read block bin among the predetermined number of read block bins.

12. A method as claimed in Claim 11, wherein the predetermined number of read block bins is Iₙ.

13. A method as claimed in any preceding claim, wherein the read block bins are memory spaces within a memory device, read blocks are accumulated into read block bins by storing successive read blocks in the memory spaces and accumulating the successive read blocks in the memory spaces.

14. A method as claimed in any preceding claim, wherein the read block bins each correspond to pixel offsets of the starts of read blocks relative to the starts of watermark blocks within the video stream.

15. A method as claimed in any preceding claim, wherein the evaluating step includes the step of detecting a shift of the watermark within the watermark blocks.

16. A method as claimed in any preceding claim, wherein each of the reading, accumulating, rescaling, combining and evaluating steps are carried out for each one of the scales within the predetermined finite number of scales.

17. A method as claimed in Claim 16, further comprising selecting one result of the evaluating steps, said selected result identifying the correct scale and shift of the watermark in the watermark blocks.

18. A watermark detecting device for detecting a watermark embedded in a watermarked video stream, the watermarked video stream having been scaled by an unknown scale among a predetermined finite number of scales, comprising:
means for dividing the watermarked video stream into a plurality of equally sized scaled watermark blocks;
means for reading the plurality of scaled watermark blocks into a plurality of read blocks;
means for accumulating each of the plurality of read blocks into one of a predetermined number of read block bins, wherein the read blocks accumulated into each read block bin each have the same offset between the start of that read block and an appropriate start of the watermark blocks,
whereby the strength of the watermark is reinforced whilst the video stream signal is de-emphasized;
means for rescaling each of the accumulated read block bins by the inverse of the respective one of the predetermined finite number of scales;
means for combining the rescaled accumulated read block bins into a single video accumulated block; and
means for evaluating a predetermined quantity within the video accumulated block to detect the watermark.

## Patentansprüche

1. Verfahren zum Erfassen eines Wasserzeichens, das in. einem mit Wasserzeichen markierten Videostrom eingebettet ist, der aus aufeinanderfolgenden Bildern gebildet ist, wobei der mit Wasserzeichen markierte Videostrom mittels einer unbekannten Skala aus einer vorbestimmten endlichen Anzahl von Skalen skaliert ist, mit, für jede der vorbestimmten endlichen Anzahl von Skalen, den Schritten:
Unterteilen des mit Wasserzeichen markierten Videostroms in eine Vielzahl von skalierten Wasserzeichenblöcken gleicher Größe;
Lesen der Vielzahl von skalierten Wasserzeichenblöcken in eine Vielzahl von Leseblöcken;
Akkumulieren von jedem der Vielzahl von Leseblöcken in einem von einer vorbestimmten Anzahl von Leseblockspeichern; wobei die Leseblöcke, die in jedem Leseblockspeicher akkumuliert sind, jeweils den gleichen Versatz zwischen dem Startpunkt von diesem Leseblock und einem geeigneten Startpunkt von den Wasserzeichenblöcken haben, wobei die Stärke des Wasserzeichens verstärkt wird, während das Videostromsignal rückentzerrt wird;
Reskalieren von jedem der akkumulierten Leseblockspeicher mittels der Inversen der jeweiligen einen der vorbestimmten endlichen Anzahl von Skalen;
Kombinieren der reskalierten, akkumulierten Leseblockspeicher zu einem einzigen akkumulierten Videoblock; und
Auswerten einer vorbestimmten Quantität in dem akkumulierten videoblock, um das Wasserzeichen zu erfassen.

2. Verfahren nach Anspruch 1, bei dem die vorbestimmte Anzahl von Leseblockspeichern durch jede der jeweiligen vorbestimmten endlichen Anzahl von Skalen bestimmt ist.

3. Verfahren nach Anspruch 2, bei dem die skalierten Wasserzeichenblöcke eine Größe von N* (I_{H}/J_{H}) x N* (I_{V}/J_{V}) haben, wobei ein ursprüngliches Wasserzeichen eine Größe von N x N hat, und wobei (I_{H}/J_{H}) und (I_{V}/J_{V}) horizontale bzw. vertikale Skalen sind, und wobei die vorbestimmte Anzahl von Leseblockspeichern für jede horizontale Skala I_{H} und für jede vertikale Skala I_{V} beträgt.

4. Verfahren nach einem der vorhergehenden Ansprüche, bei dem die Leseblöcke für jede der vorbestimmten Anzahl von Skalen die gleiche Größe haben und ausreichend groß sind, um das gesamte skalierte Wasserzeichen aufzunehmen.

5. Verfahren nach einem der vorhergehenden Ansprüche, bei dem der Schritt des Auswertens den Schritt des Transformierens des akkumulierten Videoblocks, der jeder der vorbestimmten endlichen Anzahl von Skalen entspricht, in eine Frequenz-Domäne.

6. Verfahren nach Anspruch 5, bei dem der Schritt des Transformierens das Anwenden eines DCT oder DFT auf den akkumulieten Videoblock umfasst, der jeder der vorbestimmten endlichen Anzahl von Skalen entspricht.

7. Verfahren nach Anspruch 6, bei dem die vorbestimmte, auszuwertende Quantität eine Leistung des DCT oder DFT enthält, und wobei der Schritt des Auswertens das Auswählen des DCT oder DFT mit der größten Leistung umfasst, wobei das DCT oder DFT mit der größten Leistung die korrekte Skala des Wasserzeichens aus der vorbestimmten Anzahl von Skalen und die korrekte Verschiebung des Wasserzeichens in den Wasserzeichenblöcken identifiziert.

8. Verfahren nach einem der vorhergehenden Ansprüche, bei dem Leseblöcke in Leseblockspeichern akkumuliert werdem, und zwar durch zyklisches Verteilen von aufeinanderfolgenden Leseblöcken, die den gleichen Versatz bezüglich jeweiliger Wasserzeichenblöcke in einen jeweiligen Leseblockspeicher von einer vorbestimmten Anzahl von Leseblockspeichern haben.

9. Verfahren nach Anspruch. 8, bei dem die vorbestimmte Anzahl von Leseblockspeichern mit der Skala in Beziehung steht, die auf die Wasserzeichenblöcke angewendet wird.

10. Verfahren nach Anspruch 9, bei dem die Skala, die auf die Wasserzeichenblöcke angewendet wird, I/J beträgt, wobei I und J relativ teilerfremd sind, und wobei der Schritt des Verteilens die Leseblöcke zyklisch in jeweilige I-Leseblockspeicher verteilt.

11. Verfahren nach Anspruch 10, bei dem für jede Videoskala von einer vorbestimmten Anzahl n von Videoskalen von dem Format Iₙ/Jₙ, wobei Iₙ und Jₙ relativ teilerfremd sind, jeder Iₙ-te Leseblock in den gleichen Leseblockspeicher aus der vorbestimmten Anzahl von Leseblockspeichern verteilt wird.

12. Verfahren nach Anspruch 11, bei dem die vorbestimmte Anzahl von Leseblockspeichern gleich Iₙ ist.

13. Verfahren nach einem der vorhergehenden Ansprüche, bei dem die Leseblockspeicher Speicherplätze in einer Speichervorrichtung sind, wobei Leseblöcke in Leseblockspeichern akkumuliert werden, indem aufeinanderfolgende Leseblöcke in den Speicherplätzen gespeichert und die aufeinanderfolgenden Leseblöcke in den Speicherplätzen akkumuliert werden.

14. Verfahren nach einem der vorhergehenden Ansprüche, bei dem die Leseblockspeicher jeweils Pixel-Versätze von den Startpunkten der Leseblöcke relativ zu den Startpunkten der Wasserzeichenblöcke in dem Videostrom entsprechen.

15. Verfahren nach einem der vorhergehenden Ansprüche, bei dem der Schritt des Auswertens den Schritt des Erfassens einer Verschiebung des Wasserzeichens in den Wasserzeichenblöcken beinhaltet.

16. Verfahren nach einem der vorhergehenden Ansprüche, bei dem jeder der Schritte des Lesens, Akkumulierens, Reskalierens, Kombinierens und Auswertens für jede der Skalen in der vorbestimmten endlichen Anzahl von Skalen durchgeführt wird.

17. Verfahren nach Anspruch 16, außerdem mit dem Auswählen von einem Ergebnis der Schritte des Auswertens, wobei das ausgewählte Ergebnis die korrekte Skala und Verschiebung des Wasserzeichens in den Wasserzeichenblöcken identifiziert.

18. Wasserzeichen-Erkennungsvorrichtung zum Erkennen von einem Wasserzeichen, das in einem mit Wasserzeichen markierten Videostrom eingebettet ist, wobei der mit Wasserzeichen markierte Videostrom mittels einer unbekannten Skala aus einer vorbestimmten endlichen Anzahl von Skalen skaliert ist, mit:
einer Einrichtung zum Unterteilen des mit Wa.sserzeichen markierten Videostroms in eine Vielzahl von skalierten Wasserzeichenblöcken gleicher Größe;
einer Einrichtung zum Lesen der Vielzahl von skalierten Wasserzeichenblöcke in eine Vielzahl von Leseblöcken;
einer Einrichtung zum Akkumulieren von jedem der Vielzahl von Leseblöcken in einem von einer vorbestimmten Anzahl von Leseblockspeichern, wobei die Leseblöcke, die in jedem Leseblockspeicher akkumuliert sind, jeweils den gleichen Versatz zwischen dem Startpunkt von diesem Leseblock und einem geeigneten Startpunkt von den Wasserzeichenblöcken haben, wobei die Stärke des Wasserzeichens verstärkt wird, während das Videostromsignal rückentzerrt wird;
einer Einrichtung zum Reskalieren von jedem der akkumulierten Leseblockspeicher mittels der Inversen der jeweiligen einen der vorbestimmten endlichen Anzahl von Skalen;
einer Einrichtung zum Kombinieren der reskalierten, akkumulierten Leseblockspeicher zu einem einzigen akkumulierten Videoblock; und
einer Einrichtung zum Auswerten einer vorbestimmten Quantität in dem akkumulierten Videoblock, um das Wasserzeichen zu erfassen.

## Revendications

1. Procédé de détection d'un filigrane noyé dans un flot vidéo filigrané formé d'images successives, le flux vidéo filigrané ayant été mis à l'échelle selon une échelle inconnue parmi un nombre fini prédéterminé d'échelles, comprenant, pour chacune du nombre fini prédéterminé d'échelles, les étapes qui consistent :
à diviser le flux vidéo filigrané en une pluralité de blocs de filigrane mis à l'échelle, également dimensionnés ;
à lire la pluralité de blocs de filigrane mis à l'échelle en une pluralité de blocs de lecture ;
à accumuler chacun de la pluralité de blocs de lecture dans l'une d'un nombre prédéterminé de cases de blocs de lecture, les blocs de lecture accumulés dans chaque case de blocs de lecture ayant le même décalage entre le début de ce bloc de lecture et un début approprié des blocs de filigrane, grâce à quoi la résistance du filigrane est renforcée, tandis que le signal du flux vidéo est désaccentué ;
à remettre à l'échelle chacune des cases de blocs vidéo accumulés par l'inverse de celle, respective, du nombre fini prédéterminé d'échelles ;
à combiner les cases de blocs de lecture accumulés remis à l'échelle en un bloc accumulé vidéo unique ; et
à évaluer une quantité prédéterminée dans le bloc accumulé vidéo pour détecter le filigrane.

2. Procédé selon la revendication 1, dans lequel le nombre prédéterminé de cases de blocs de lecture est déterminé par chacune du nombre fini prédéterminé respectif d'échelles.

3. Procédé selon la revendication 2, dans lequel les blocs de filigrane mis à l'échelle ont pour taille N* (L_{H}/J_{H}) xN* (I_{V}/J_{V}) où un filigrane original a une taille de N x N et où (I_{H}/J_{H}) et (I_{V}/J_{V}) sont des échelles horizontale et verticale, respectivement, et dans lequel le nombre prédéterminé de cases de blocs de lecture est I_{H} pour chaque échelle horizontale et I_{V} pour chaque échelle verticale.

4. Procédé selon l'une quelconque des revendications précédentes, dans lequel les blocs de lecture sont de la même taille pour chacune du nombre prédéterminé d'échelles, et sont suffisamment grands pour loger un filigrane entier mis à l'échelle.

5. Procédé selon l'une quelconque des revendications précédentes, dans lequel l'étape d'évaluation comprend l'étape de transformation du bloc accumulé vidéo correspondant à chacune du nombre fini prédéterminé d'échelles en un domaine de fréquence.

6. Procédé selon la revendication 5, dans lequel l'étape de transformation comprend l'application d'un DCT ou d'un DFT au bloc accumulé vidéo correspondant à chacune du nombre fini prédéterminé d'échelles.

7. Procédé selon la revendication 6, dans lequel la quantité prédéterminée devant être évaluée comprend une puissance du DCT ou du DFT, et dans lequel l'étape d'évaluation comprend la sélection du DCT ou du DFT ayant la puissance la plus grande, le DCT ou le DFT ayant la puissance la plus grande identifiant l'échelle correcte du filigrane parmi le nombre prédéterminé d'échelles et le déplacement correct du filigrane dans les blocs de filigrane.

8. Procédé selon l'une quelconque des revendications précédentes, dans lequel des blocs de lecture sont accumulés dans des cases de blocs de lecture par une distribution cyclique de blocs de lecture successifs ayant le même décalage par rapport à des blocs de filigrane respectifs dans une case de bloc de lecture respective d'un nombre prédéterminé de cases de blocs de lecture.

9. Procédé selon la revendication 8, dans lequel le nombre prédéterminé de cases de blocs de lecture est lié à l'échelle appliquée aux blocs de filigrane.

10. Procédé selon la revendication 9, dans lequel l'échelle appliquée aux blocs de filigrane est I/J où I et J sont premiers entre eux et dans lequel l'étape de distribution distribue cycliquement les blocs de lecture dans I cases de blocs de lecture respectives.

11. Procédé selon la revendication 10, dans lequel, pour chaque échelle vidéo d'un nombre prédéterminé n d'échelles vidéo de format Iₙ/J_{n,} où Iₙ et Jₙ sont premiers entre eux, chaque Iₙ^{ième} bloc de lecture est distribué dans la même case de blocs de lecture parmi le nombre prédéterminé de cases de blocs de lecture.

12. Procédé selon la revendication 11, dans lequel le nombre prédéterminé de cases de blocs de lecture est Iₙ.

13. Procédé selon l'une quelconque des revendications précédentes, dans lequel les cases de blocs de lecture sont des espaces de mémoire dans un dispositif à mémoire, des blocs de lecture sont accumulés dans des cases de blocs de lecture par le stockage de blocs de lecture successifs dans les espaces de mémoire et l'accumulation des blocs de lecture successifs dans les espaces de mémoire.

14. Procédé selon l'une quelconque des revendications précédentes, dans lequel les cases de blocs de lecture correspondent chacune à des décalages de pixels des débuts des blocs de lecture par rapport aux débuts des blocs de filigrane dans le flux vidéo.

15. Procédé selon l'une quelconque des revendications précédentes, dans lequel l'étape d'évaluation comprend l'étape de détection d'un déplacement du filigrane dans les blocs de filigrane.

16. Procédé selon l'une quelconque des revendications précédentes, dans lequel chacune des étapes de lecture, d'accumulation, de remise à l'échelle, de combinaison et d'évaluation est exécutée pour chacune des échelles dans le nombre fini prédéterminé d'échelles.

17. Procédé selon la revendication 16, comprenant en outre la sélection d'un résultat des étapes d'évaluation, ledit résultat sélectionné identifiant l'échelle correcte et le déplacement du filigrane dans les blocs de filigrane.

18. Dispositif de détection de filigrane destiné à détecter un filigrane noyé dans un flux vidéo filigrané, le flux vidéo filigrané ayant été mis à l'échelle par une échelle inconnue parmi un nombre fini prédéterminé d'échelles, comportant :
un moyen destiné à diviser le flux vidéo filigrané en une pluralité de blocs de filigrane mis à l'échelle, dimensionnés de façon égale ;
un moyen destiné à lire la pluralité de blocs de filigrane mis à l'échelle en une pluralité de blocs de lecture ;
un moyen destiné à accumuler chacun de la pluralité de blocs de lecture dans l'une d'un nombre prédéterminé de cases de blocs de lecture, dans lequel les blocs de lecture accumulés dans chaque case de blocs de lecture ont chacun le même décalage entre le début de ce bloc de lecture et un début approprié des blocs de filigrane, grâce à quoi la résistance du filigrane est renforcée, tandis que le signal du flux vidéo est désaccentué ;
un moyen pour remettre à l'échelle chacune des cases de blocs de lecture accumulées par l'inverse de celle, respective, du nombre fini prédéterminé d'échelles ;
un moyen pour combiner les cases de blocs de lecture accumulées, remises à l'échelle, en un bloc accumulé vidéo unique ; et
un moyen pour évaluer une quantité prédéterminée dans le bloc vidéo accumulé afin de détecter le filigrane.
